# EUROPEAN PATENT APPLICATION

(11) **EP 4 644 654 A1**
(43) Date of publication of application: **05.11.2025**
(21) Application number: 22970100.8
(22) Date of filing: 27.12.2022
(51) Int. Cl.: E05F 15/73

(54) **CONTROL DEVICE AND CONTROL METHOD**

(71) Applicant: Nissan Motor Co., Ltd., Yokohama-shi, Kanagawa 221-0023 (JP)
(72) Inventor: TANIGUCHI, Masatora, Atsugi-shi, Kanagawa 243-0123 (JP)
(74) Representative: Global IP Europe Patentanwaltskanzlei
(86) International application number: PCT/JP2022/048356
(87) International publication number: WO 2024/142311

(57) **Abstract**

The control device (10) is a device which outputs an execution command for executing a locational open/close control which opens and closes a door corresponding to a locational relationship between a location of the door and a location of a user, stores selected door information indicative of a selected door selected by the user among a plurality of the doors and setting information indicating whether to enable the locational open/close control or not, sets whether to enable the locational open/close control or not for each of the plurality of doors, and outputs the execution command to the selected door for which the locational open/close control is enabled corresponding to a locational relationship between a location of the selected door for which the locational open/close control is enabled and the location of the user.

## Description

### Technical Field

The present invention relates to a control device and a control method.

### Background Art

There has been known a technique that supplies an electric power to a security release unit when location information indicating that a resident is present within a predetermined range from a residence is detected, and puts an automatic locking door into an unlocked state using the security release unit.

### Prior Art Document

### Patent Document

Patent Document 1: JP 2017-059178 A

### Summary of Invention

### Problems to be Solved by Invention

However, with the technique described in Patent Document 1, a door that is not intended by a user sometimes is opened when a plurality of doors are present within a predetermined range from a location of the user, which is problematic because an open/close control of the door intended by the user is not executed.

A problem to be solved by the present invention is to provide a control device and a control method which allow execution of an open/close control of a door intended by a user.

### Means for Solving Problems

The present invention solves the above-described problem by storing selected door information indicative of a selected door selected by a user among a plurality of doors and setting information indicating whether to enable a locational open/close control which opens and closes a door corresponding to a locational relationship between a location of the door and a location of the user or not, setting whether to enable the locational open/close control or not for each of the plurality of doors, and outputting the execution command for executing the locational open/close control to the selected door for which the locational open/close control is enabled corresponding to a locational relationship between a location of the selected door for which the locational open/close control is enabled and the location of the user.

### Effects of Invention

The present invention allows execution of an open/close control of a door intended by a user.

### Brief Description of Drawings

FIG. 1 is a drawing illustrating an exemplary configuration of a control system including a control device in an embodiment.
FIG. 2 is a drawing illustrating an exemplary screen transition in the control device according to the embodiment.
FIG. 3A is a drawing illustrating a main screen according to the embodiment.
FIG. 3B is a drawing illustrating a setting screen according to the embodiment.
FIG. 3C is a drawing illustrating a selected door confirmation screen according to the embodiment.
FIG. 3D is a drawing illustrating a selected door setting screen according to the embodiment.
FIG. 3E is a drawing illustrating a door location confirmation screen according to the embodiment.
FIG. 3F is a drawing illustrating a door location setting screen according to the embodiment.
FIG. 4A is a drawing illustrating an open control confirmation screen according to the embodiment.
FIG. 4B is a drawing illustrating an open control notification screen according to the embodiment.
FIG. 4C is a drawing illustrating an open control completion screen according to the embodiment.
FIG. 4D is a drawing illustrating an open state notification screen according to the embodiment.
FIG. 5A is a drawing illustrating a close control confirmation screen according to the embodiment.
FIG. 5B is a drawing illustrating a close control notification screen according to the embodiment.
FIG. 5C is a drawing illustrating a close control completion screen according to the embodiment.
FIG. 5D is a drawing illustrating a closed state notification screen according to the embodiment.
FIG. 5E is a drawing illustrating a reconfirmation screen according to the embodiment.
FIG. 6 is a flowchart showing an exemplary procedure of a control method according to the embodiment.
FIG. 7 is a flowchart illustrating an exemplary procedure of executing a locational open/close control according to the embodiment.

### Mode(s) for Carrying out the Invention

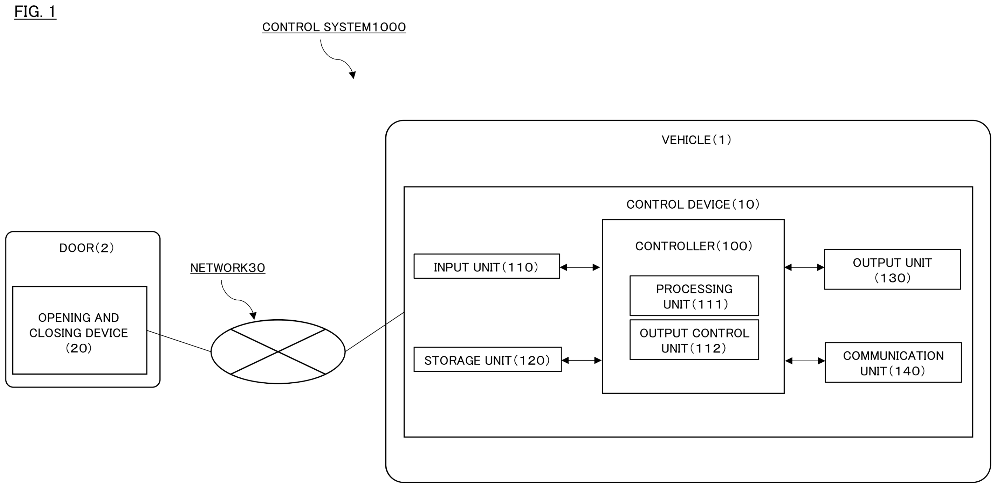

One embodiment of a control device according to the present invention will be described on the basis of the drawings. FIG. 1 is a block diagram illustrating an exemplary configuration of a control system including the control device according to the embodiment. A control system 1000 includes a control device 10, an opening and closing device 20, and a network 30. The control device 10 is a device mounted on a vehicle 1, and is an information transmittable and receivable server that communicates with the opening and closing device 20 located away from the vehicle 1. The opening and closing device 20 is a device disposed in a door 2 located away from the vehicle 1, and is a device that executes an open/close control which opens and closes the door 2. The control device 10 outputs an execution command to the opening and closing device 20, and thus, controls the opening and closing device 20 to execute the open/close control of the door 2. As soon as receiving the execution command from the control device 10, the opening and closing device 20 executes the open/close control of the door. That is, the control device 10 can remotely operate to control the opening and closing device 20. The network 30 is a telecommunication network, such as the Internet and LAN, and is not specifically limited as long as it can transmit and receive information between the control device 10 and the opening and closing device 20, and therefore, a known telecommunication network is usable.

The door 2, which is subject to the open/close control, is a door of a user's home or a door of a garage in which a vehicle is stored. The door 2 includes the opening and closing device 20, and is a door openable/closable by a remote operation. Hereinafter, the door 2 is also referred to as a target door. There may be a plurality of the doors 2 that are subject to the open/close control. That is, there may be a plurality of the opening and closing devices 20. In this embodiment, a garage door is described as an example of the door 2. In this embodiment, an example in which the user is on board the vehicle 1 is used for description. In this case, location information of the vehicle 1 is obtained as location information of the user. Note that the configuration is not limited to this, and the user may be traveling on foot or the like while carrying the control device 10. In this case, for example, a smart phone, a mobile phone, a portable computer, or the like is usable as the control device 10.

The control device 10 includes a controller 100, an input unit 110, a storage unit 120, an output unit 130, and a communication unit 140. The control device 10 controls the opening and closing device 20 to execute the open/close control of the door 2. In this embodiment, the control device 10 causes the open/close control to be executed by two methods. Specifically, the control device 10 outputs the execution command for executing the open/close control of the door 2 to the door 2 via the communication unit 140 when any one of two conditions is met. A first method is a method of opening and closing the door 2 corresponding to a locational relationship between a location of the door 2 and a location of the user. Hereinafter, the open/close control according to the first method is referred to as a locational open/close control. A second method is a method of performing the open/close control of the door 2 corresponding to a command by the user. Hereinafter, the open/close control according to the second method is referred to as a user command open/close control. Note that the method of causing the open/close control of the door to be executed is not limited to these two, and another method may be used.

The locational open/close control will be described. The control device 10 obtains door location information that indicates a location of the target door that can be subject to the locational open/close control, and sets a range separated from the location of the door by a predetermined distance as an approach area (what is called, a geofence). The approach area is a range for making a determination corresponding to the locational relationship between the location of the door and the location of the user in the locational open/close control. The predetermined distance is not specifically limited, and is, for example, a distance within which the user can visually perceive the target door. Note that, as described later, the locational open/close control is executed for a selected door for which the locational open/close control is enabled in this embodiment. The selected door is a door selected by the user among the target doors. The locational open/close control is not executed for the selected door for which the locational open/close control is disabled and the target door other than the selected door, and when a command from the user is present, the user command open/close control is executed.

First, one example in which the selected door is put into an open state by the locational open/close control will be described. The control device 10 obtains the door location information indicative of the location of the selected door. The control device 10 obtains user location information indicative of the current location of the user at a constant cycle to determine whether the user has entered the approach area from the outside of the approach area of the selected door or not. When determining that the user has entered the approach area, the control device 10 outputs the execution command for executing the open control of the selected door to the opening and closing device 20 of the selected door via the communication unit 140. When determining that the user has not entered the approach area, the control device 10 executes the determination of whether the user has entered the approach area or not in a continuous manner.

Next, one example in which the selected door is put into a close state by the locational open/close control will be described. The control device 10 obtains the door location information indicative of the location of the selected door. The control device 10 obtains the user location information indicative of the current location of the user at a constant cycle to determine whether the user has gone outside the approach area from the inside of the approach area of the selected door or not. When determining that the user has gone outside the approach area, the control device 10 outputs the execution command for executing the close control of the selected door to the opening and closing device 20 of the selected door via the communication unit 140. When determining that the user has not gone outside the approach area, the control device 10 executes the determination of whether the user has gone outside the approach area or not in a continuous manner.

The user command open/close control will be described. The control device 10 determines whether the user has made a command to perform the open control or the close control of the target door or not at a constant cycle. The control device 10 outputs the execution command for executing the open control or the close control of the target door to the opening and closing device 20 of the target door via the communication unit 140 when the command to perform the open control or the close control of the target door is made. When the command to perform the open control or the close control of the target door is not made, the control device 10 executes the determination of whether the command to perform the open control or the close control of the target door is made or not in a continuous manner. Note that the user command open/close control is executed for the target door including the selected door in this embodiment.

The input unit 110 is constituted of a button switch that allows an input by an operation by the user, a touchscreen arranged on a display screen, and the like, and receives an input of information from the user. In this embodiment, the user operates the input unit 110 to command to set the target door, select the selected door, select whether to enable the locational open/close control or not, and command to set the door location information. The input unit 110 is constituted of, for example, a toggle button for selecting whether to set the target door as the selected door or not, a toggle button for selecting whether to enable the locational open/close control or not, and the like. The input information including the command and selection of the user input to the input unit 110 is output to the controller 100.

The storage unit 120 is a storage medium, such as a memory, and stores door information relating to the target door for each target door. The storage unit 120 is an exemplary "storage medium" described in the appended claims. The storage unit 120 stores the door information of the target door when the command to set the target door by the user is made. The door information includes, for example, identification information for identifying the target door and the door location information indicative of the location of the target door. The identification information is, for example, a name of the target door. The user can set a door of a garage at home or the like as the target door, and set a name for identifying the target door. In this embodiment, the user can set the plurality of doors as the target doors. The door information may include information of the approach area, information relating to necessity of an automatic close control, and information of time at which the automatic close control is executed.

The storage unit 120 stores selected door information indicative of the selected door selected by the user among the plurality of target doors. In this embodiment, information indicating whether it is the selected door or not is stored for each of the plurality of target doors. When the user selects the target door as the selected door, the selected door information is stored in the selected target door. For example, the storage unit 120 stores the selected door information indicative of the selected door in the target door when a processing unit 111 sets the target door as the selected door corresponding to the selection by the user. Non-selected door information indicating that it is not the selected door, that is, it is a non-selected door is stored in the target door other than the selected door. In this embodiment, the user can switch the setting of the target door from the non-selected door to the selected door, and from the selected door to the non-selected door. The storage unit 120 stores the selected door information or the non-selected door information for each of the plurality of target doors corresponding to the selection of the user.

In this embodiment, only one selected door may be set among the plurality of target doors. That is, two selected doors are not set simultaneously. For example, the storage unit 120 updates the target door that has been stored as the selected door as the non-selected door when the target door different from the stored selected door is newly selected as the selected door. The storage unit 120 then stores the selected door information indicative of the selected door newly selected. That is, the selected door information is stored in the target door newly selected as the selected door.

In this embodiment, the storage unit 120 may store the door information of the target door for each user when a plurality of users are present, not only when one user is present. In this case, the storage unit 120 may store and associate the identification information that identifies each of the plurality of users and the selected door information indicative of the selected doors selected by the plurality of respective users. The identification information of the user is, for example, an account ID of the user.

The storage unit 120 stores setting information of the target door for each target door. The setting information of the target door is information relating to the setting of the locational open/close control for the target door. The setting information includes information indicating whether the locational open/close control is enabled or not and information indicating whether the operation to set whether to enable the locational open/close control or not is enabled or not.

The storage unit 120 stores the setting information indicating that the locational open/close control is enabled in the target door when the processing unit 111 sets to enable the locational open/close control for the target door. The storage unit 120 stores the setting information indicating that the locational open/close control is disabled in the target door when the processing unit 111 sets to disable the locational open/close control for the target door.

When the processing unit 111 sets to enable the operation to select whether to enable the locational open/close control for the target door or not, the storage unit 120 stores the setting information indicating that the operation is enabled in the target door. When the processing unit 111 sets to disable the operation to select whether to enable the locational open/close control for the target door or not, the storage unit 120 stores the setting information indicating that the operation is disabled in the target door. The storage unit 120 may store information set by the user when the user commands to set other information, such as the door location of the target door and the approach area.

The controller 100 includes a computer including hardware and software, and this computer includes a ROM that stores programs, a CPU that executes the programs stored in the ROM, and a RAM that functions as an accessible storage device. Note that, instead of the CPU or together with the CPU, an MPU, a DSP, an ASIC, an FPGA, and the like may be used as operation circuits.

In this embodiment, the controller 100 outputs the execution command for executing the locational open/close control. The controller 100 is constituted including at least the processing unit 111 and an output control unit 112 as function blocks, and respective functions are executed by collaboration of the software and the hardware for achieving the above-described respective functions or executing the respective processes. Note that, in this embodiment, the functions of the controller 100 are divided into two blocks, and the functions of the respective function blocks are described. However, the functions of the controller 100 are not necessarily divided into two blocks.

The processing unit 111 performs information processing relating to the open/close control of the target door. The processing unit 111 sets the selected target door as the selected door when the user selects the selected door among the plurality of target doors. The processing unit 111 sets whether to enable the locational open/close control or not for each of the plurality of target doors. The processing unit 111 sets to disable the locational open/close control for the selected door when the user selects the selected door. That is, at the point when the user selects the selected door, the processing unit 111 once sets to disable the locational open/close control for the selected door. After selecting the selected door, the user sets to enable the locational open/close control in the setting of the selected door, and thus, the locational open/close control on the selected door can be executed. Note that, while in this embodiment, the locational open/close control for the selected door is set to be disabled once, the configuration is not limited to this, and when the user selects the selected door, the processing unit 111 may set to enable the locational open/close control for the selected door. These configurations are not necessary configurations, and are applied as necessary.

The processing unit 111 sets to disable the locational open/close control for the target door other than the selected door (the non-selected door). For example, when the user selects the non-selected door, the processing unit 111 sets to disable the locational open/close control for the non-selected door. In this embodiment, when the user selects the selected door among the target doors, the processing unit 111 sets the target door other than the selected door as the non-selected door, and sets to disable the locational open/close control for the non-selected door.

When the user selects whether to enable a location-based control for the selected door or not, the processing unit 111 sets whether to enable the location-based control on the selected door or not corresponding to the selection made by the user. When the user sets to enable the location-based control for the selected door, the processing unit 111 sets to enable the location-based control for the selected door. When the user sets to disable the location-based control for the selected door, the processing unit 111 sets to disable the location-based control for the selected door.

The processing unit 111 may set whether to enable the operation of selecting whether to enable the locational open/close control for each target door or not. When the user selects the selected door, the processing unit 111 enables the operation of selecting whether to enable the locational open/close control for the selected door or not, and disables the operation of setting whether to enable the locational open/close control for the target door other than the selected door (the non-selected door) or not. In this embodiment, the operation of selecting whether to enable the locational open/close control or not is set to be disabled for the non-selected door. Therefore, the user can change whether to enable the locational open/close control or not only for the selected door. That is, in this embodiment, the user cannot select whether to enable the locational open/close control or not unless the target door is set as the selected door. Note that, in this embodiment, the configuration is not limited to this, and the user may be able to change whether to enable the locational open/close control or not for the target door other than the selected door (the non-selected door).

The processing unit 111 may enable the operation of selecting whether to enable the locational open/close control or not for the selected door and the target door away from the selected door by a predetermined distance or more. For example, when the selected door is a door of the user's home, and another target door is present at a location away from home, the user can select whether to enable the locational open/close control or not for the door at the location away from the selected door. In this case, the processing unit 111 disables the operation of selecting whether to enable the locational open/close control or not for the target door at a location at less than the predetermined distance from the selected door.

The processing unit 111 sets the door location information of the target door. For example, when the user selects to enable the locational open/close control for the selected door, the processing unit 111 sets the door location information of the selected door. Regarding the setting of the door location information of the selected door, a description will be given with an example in which the selected door is a door of a garage storing the vehicle 1. In this case, the user commands to set the current location of the vehicle 1 as the location of the selected door when the vehicle 1 is in the garage. When the user commands to set the current location of the vehicle 1 as the location of the selected door, the processing unit 111 obtains the location information of the vehicle 1, and sets the door location information with the current location of the vehicle 1 as the location of the selected door. When the user selects the location of the selected door on a map, the processing unit 111 may set the location selected by the user as the location of the selected door.

The output control unit 112 outputs the information for executing the open/close control for the target door. The information for executing the open/close control is, for example, an execution command for executing the open/close control. The output control unit 112 outputs the execution command to the opening and closing device 20 via the communication unit 140. The information for executing the open/close control is, for example, information for confirming whether to execute the open/close control or not with the user. The output control unit 112 may output confirmation information for confirming whether to execute the open/close control or not with the user via the output unit 130 before outputting the execution command. When the user sees the confirmation information displayed on the output unit 130 and commands to execute the open/close control, the execution command is output to the opening and closing device 20. Note that the output of the confirmation information for confirming whether to execute the open/close control or not with the user is not a necessary configuration of the present invention, and may be appropriately set as necessary.

In this embodiment, the output control unit 112 outputs the execution command to the selected door for which the locational open/close control is enabled corresponding to the locational relationship between the location of the selected door for which the locational open/close control is enabled and the location of the user. Here, one example of outputting the execution command for executing the open control will be described. The output control unit 112 obtains the selected door information from the storage unit 120 and identifies the selected door. The output control unit 112 obtains the setting information indicating whether to enable the location-based control or not, which is set for the selected door. The output control unit 112 obtains the door location information of the selected door when the location-based control for the selected door is enabled. The output control unit 112 obtains the location information of the user at a constant cycle and determines whether the user has entered the approach area of the selected door or not on the basis of the location of the selected door for which the location-based control is enabled and the location of the user. When a determination that the user has entered the approach area of the selected door is made, the output control unit 112 controls the output unit 130 to output the information for executing the open control of the selected door. The information for executing the open control of the selected door is, for example, the confirmation information for confirming whether to execute the open control of the selected door or not with the user. The confirmation information includes, for example, a confirmation display for the user to confirm to execute the open control of the selected door and a captured image that captures an image of an environment near the selected door. When the user commands to execute the open control of the selected door, the output control unit 112 outputs the execution command for executing the open control to the opening and closing device 20 of the selected door via the communication unit 140.

Next, one example of outputting the execution command for executing the close control will be described. The output control unit 112 obtains the selected door information from the storage unit 120 and identifies the selected door. The output control unit 112 obtains the setting information indicating whether to enable the location-based control or not, which is set for the selected door. When the location-based control for the selected door is enabled, the output control unit 112 obtains the door location information of the selected door. The output control unit 112 obtains the location information of the user at a constant cycle. The output control unit 112 determines whether the user has gone outside the approach area of the selected door or not on the basis of the location of the selected door for which the locational open/close control is enabled and the location of the user. When a determination that the user has gone outside the approach area of the selected door is made, the output control unit 112 controls the output unit 130 to output the information for executing the close control of the selected door. The information for executing the close control of the selected door is, for example, confirmation information for confirming whether to execute the close control of the selected door or not with the user. When the user commands to execute the close control of the selected door, the output control unit 112 outputs the execution command for executing the close control to the opening and closing device 20 of the selected door via the communication unit 140.

As described above, in this embodiment, the locational open/close control is executed only for the selected door selected by the user among the plurality of target doors for which the locational open/close control is possible, and therefore, the door not intended by the user being opened and closed by the locational open/close control can be suppressed. Also when the necessity of the execution is confirmed with the user before the open/close control is executed, outputting the information for confirming the necessity of the execution of the open/close control for the door not intended by the user can be suppressed.

When the user commands the open/close control for the target door for which the locational open/close control is disabled, the output control unit 112 causes the execution command for executing the open/close control of the target door to be output to the target door on the basis of the user command. Specifically, the output control unit 112 outputs the execution command that causes the open/close control of the target door to be executed to the opening and closing device 20 of the target door via the communication unit 140. The user can command to execute the open/close control by his or her own determination even when the confirmation of whether to execute the open/close control or not is not present.

When the user selects to enable the locational open/close control for the selected door, the output control unit 112 determines whether the door location information indicative of the location of the selected door is set or not. When a determination that the door location information is not set is made, the output control unit 112 instructs the user to set the door location information. The output control unit 112 controls the output unit 130 to display the information for commanding the setting of the door location information of the selected door. The information is, for example, a display image including the screen for setting the door location information of the selected door. The screen includes a map image including the current location of the vehicle 1 and a confirmation display for the user to confirm that the vehicle is present in a building in which the selected door is installed. The display image may be an image that displays a map image including the current location of the vehicle 1 and a circle centering the selected door on the screen for setting the door location information of the selected door. The user commands to set the door location information with the current location of the vehicle 1 as the door location of the selected door while seeing the screen displayed on the output unit 130 when the vehicle 1 is present in the garage.

When the user sets the approach area, the output control unit 112 may cause the output unit 130 to display the display image displaying the map image including the current location of the vehicle 1 and the circle centering the selected door on the screen for setting the approach area.

The output unit 130 is, for example, constituted of a liquid crystal display and the like, and can double as the input unit 110 when it is a touchscreen display. The output unit 130 displays an operation screen of an application for the open/close control. The operation screen includes, for example, a main screen showing a state of the target door, a setting screen to set the target door, and the like. The output unit 130 may include a speaker or the like that outputs sound information.

The communication unit 140 communicates with the vehicle 1 and the opening and closing device 20, and mutually transmits and receives information. Specifically, the communication unit 140 is connected with the vehicle 1 via wire, wireless LAN, or the like. The communication unit 140 receives, for example, the location information indicative of the current location of the vehicle 1 from the vehicle 1. The communication unit 140 transmits the execution command to execute the open/close control of the target door to the opening and closing device 20 via the network 30. Note that the communication unit 140 may directly communicate with the opening and closing device 20 or may indirectly communicate with the opening and closing device 20 via another server.

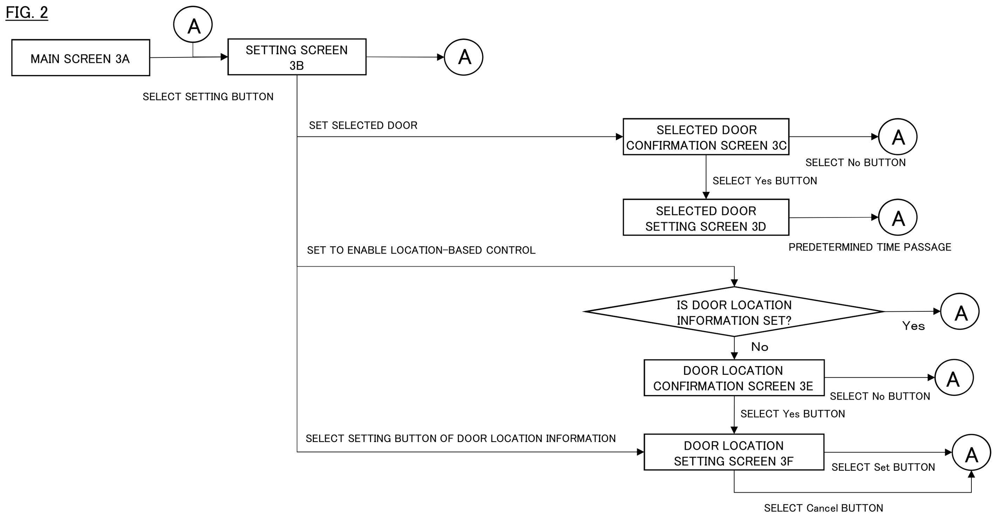

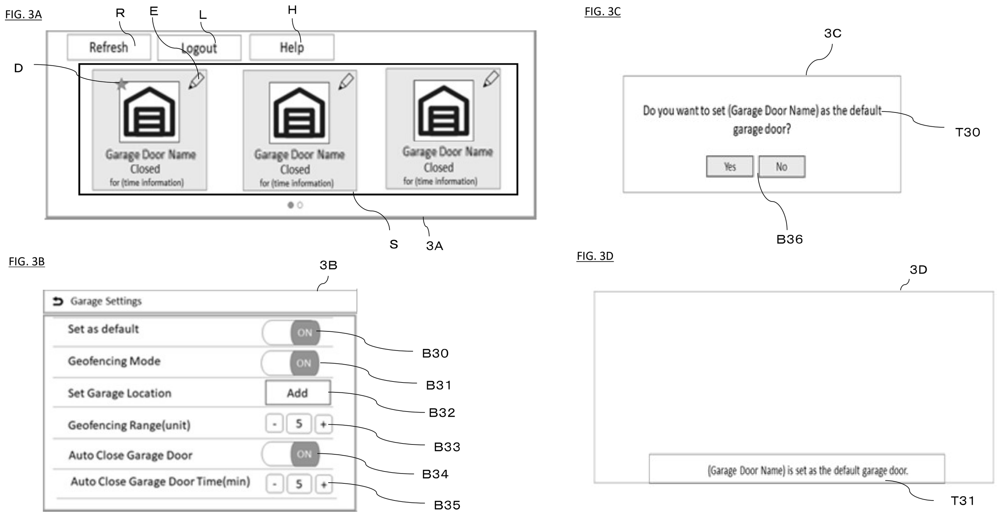

Next, using FIG. 2, FIG. 3A to FIG. 3F, an exemplary control device and control method according to the embodiment will be described with an example of an application for the open/close control of the target door. FIG. 2 is a drawing illustrating a screen transition in the control device 10 according to the embodiment. FIG. 3A to FIG. 3F are drawings illustrating an example of each screen the output unit 130 are caused to display by the control device 10. As soon as the user selects an object of the application for the open/close control of the target door on a home screen displayed on the output unit 130, the control device 10 activates the application for the open/close control of the target door. The home screen includes an object for activating the application executed by the control device 10. When the application for the open/close control of the target door is activated, the control device 10 controls the output unit 130 to display a main screen 3A of the application for the open/close control of the target door. FIG. 3A is a drawing illustrating the main screen of the application.

As illustrated in the FIG. 3A, the main screen 3A includes a door state image S indicative of the state of the target door, an update button image R for updating the screen, a logout button image L for executing log-out, and a help button image H that displays information, such as usage of the application. The door state image S includes the name of the target door, the state of the door indicating the open state or the close state, and information of elapsed time. When the plurality of target doors are set, the door state images S of the respective target doors are displayed. The door state image S includes a setting button image E for displaying the setting screen of the target door and a mark image D that indicates that the target door is the selected door. In this embodiment, when the selected door is set, the mark image D is added to the image of the selected door. In the example of the application, the selected door is shown with a notation of "default door," but the notation is not limited to this, and it may be shown with a notation of "favorite door." The mark image is, for example, an icon image of a star. When the selected door is set, a display position of the selected door may move to a position on the leftmost side on the main screen.

The user may be able to command the open/close control of the target door on the main screen 3A. When the user selects the door state image S, the control device 10 may cause the open/close control of the target door corresponding to the door state image S to be executed.

When the user selects the setting button image E of the target door on the main screen 3A, the control device 10 transitions the screen displayed on the output unit 130 to a setting screen 3B of the target door. As illustrated in FIG. 3B, the setting screen 3B includes a toggle button (on/off button) B30 for selecting whether to set the target door as the selected door or not, a toggle button B31 for selecting whether to enable the locational open/close control or not, a button B32 for setting location information of a door, a button B33 for setting an approach area, a toggle button B34 for selecting whether to enable an automatic close control of the target door or not, and a button B35 for setting a time at which the automatic close control of the target door is executed.

The user operates the toggle button B30 on the setting screen 3B to select to set the target door as a selected door or a non-selected door. By default, a first target door may be set as a selected door, or when another target door is set as a selected door in the case where the selected door is already set, the already-set selected door may be switched to a non-selected door. When the user sets one target door as a selected door once, the setting operation may be disabled. When another target door is set as a selected door, the setting operation may be enabled.

The user operates a toggle button B31 on the setting screen 3B to select whether to enable the locational open/close control or not. Note that, by default, the locational open/close control may be set to be disabled. When the selected door is not set, the operation of the toggle button B31 that sets whether to enable the locational open/close control or not is set to be disabled, and displayed in gray.

The user operates the button B33 on the setting screen 3B to set the approach area. The approach area can be set within a range of 50 m to 200 m. For example, when the user touches the button B33 for a short period of time, a value of the approach area increases/decreases by unit of 50 m, and when the user touches the button B33 for a while, a value of the approach area increases/decreases by unit of 100 m.

When the user selects to set the target door as a selected door on the setting screen 3B, the control device 10 transitions the screen displayed on the output unit 130 to a selected door confirmation screen 3C. FIG. 3C is a drawing illustrating the selected door confirmation screen. As illustrated in FIG. 3C, the selected door confirmation screen 3C includes a text T30 for confirming whether to set the target door as the selected door or not, and a button (Yes/No button) B36 for selecting whether to set the target door as the selected door or not. When the user selects the button to set the target door as the selected door (selects the Yes button) on the selected door confirmation screen 3C, the control device 10 sets the target door as the selected door, and transitions the screen displayed on the output unit 130 to a selected door setting screen 3D. When the user does not select the button to set the target door as the selected door (selects the No button) on the selected door confirmation screen 3C, the control device 10 does not set the target door as the selected door, and transitions the screen displayed on the output unit 130 to the setting screen 3B. FIG. 3D is a drawing illustrating the selected door setting screen. As illustrated in FIG. 3D, the selected door setting screen 3D includes a text T31 indicating that the target door is set as the selected door. The control device 10 transitions the screen displayed on the output unit 130 to the setting screen 3B after a predetermined time passes after the selected door setting screen 3D has been displayed.

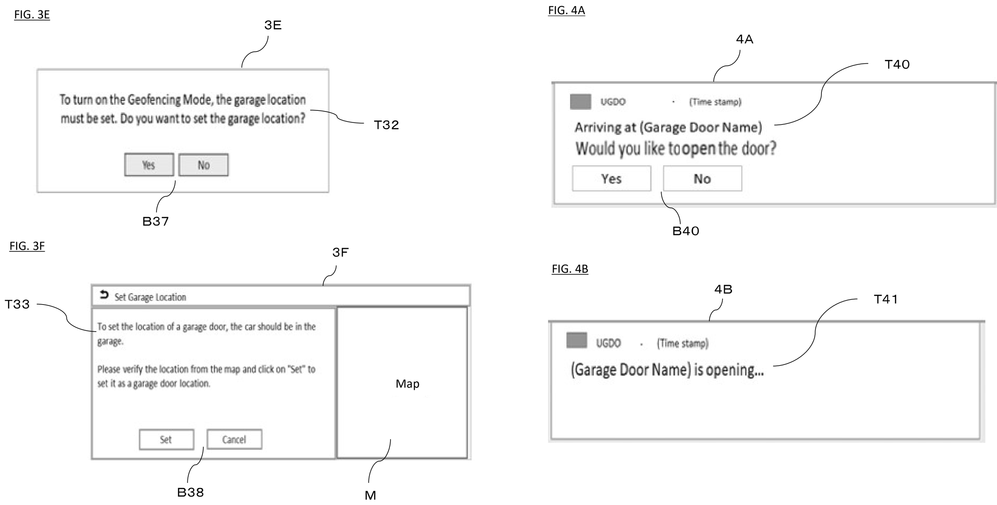

When the user operates the toggle button B31 and selects to enable the locational open/close control on the setting screen 3B, the control device 10 determines whether the selected door for which the locational open/close control is selected to be enabled has the door location information set or not. When determining that the door location information is set, the control device 10 transitions the screen displayed on the output unit 130 to the setting screen 3B after enabling the locational open/close control. When determining that the door location information is not set, the control device 10 transitions the screen displayed on the output unit 130 to a door location confirmation screen 3E. FIG. 3E is a drawing illustrating the door location confirmation screen. As illustrated in FIG. 3E, the door location confirmation screen 3E includes a text T32 for confirming whether to set the door location information of the selected door or not and a button (Yes/No button) B37 for selecting whether to set the door location information of the selected door or not. When the user selects the button to set the door location information of the selected door (selects the Yes button) on the door location confirmation screen 3E, the control device 10 transitions the screen displayed on the output unit 130 to a door location setting screen 3F. When the user does not select the button to set the location of the selected door (selects the No button) on the door location confirmation screen 3E, the control device 10 transitions the screen displayed on the output unit 130 to the setting screen 3B.

FIG. 3F is a drawing illustrating the door location setting screen. As illustrated in FIG. 3F, the door location setting screen 3F includes a map image M including the current location of the vehicle 1, a text T33 to confirm that a vehicle is present in a building in which the selected door is installed with the user, a button (Set/Cancel button) B38 for selecting whether to set the door location information of the selected door or not. When the user commands to set the current location of the vehicle as the location of the selected door (selects the Set button), the control device 10 sets the door location information with the current location of the vehicle as the location of the selected door, and transitions the screen displayed on the output unit 130 to the setting screen 3B. When the user does not command the setting of the location information of the selected door (selects the Cancel button), the control device 10 transitions the screen displayed on the output unit 130 to the setting screen 3B. Note that, when the user selects the button B32 on the setting screen 3B, the control device 10 transitions the screen displayed on the output unit 130 to the door location setting screen 3F.

When the user does not command the setting of the location information of the selected door on the door location confirmation screen 3E or the door location setting screen 3F after the user has set to enable the locational open/close control for the selected door, the control device 10 may set to disable the locational open/close control. When the user commands the setting of the location information of the selected door on the door location setting screen 3F after the user has selected to enable the locational open/close control, the control device 10 may set to enable the locational open/close control.

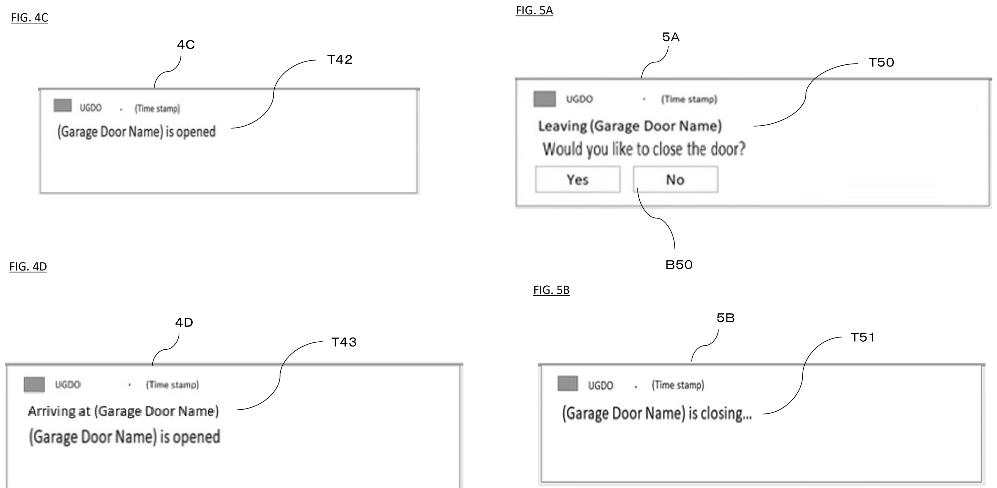

Next, using FIG. 4A to FIG. 4D, an exemplary screen display in the control device 10 according to the embodiment when the user has entered the approach area of the selected door will be described. FIG. 4A is a drawing illustrating an open control confirmation screen. An open control confirmation screen 4A is a screen for confirming whether to execute the open control of the selected door or not. When determining that the user has entered the approach area of the selected door, the control device 10 controls the output unit 130 to display the open control confirmation screen illustrated in FIG. 4A. As illustrated in FIG. 4A, the open control confirmation screen 4A includes a text T40 that indicates that the user is approaching the selected door and the confirmation of executing the open control of the selected door, and a button (Yes/No button) B40 for selecting whether the user executes the open control or not. When the user selects the execution of the open control (selects the Yes button), the control device 10 outputs the execution command for executing the open control of the selected door to the opening and closing device 20 of the selected door. While the open control of the selected door is being executed, the control device 10 controls the output unit 130 to output an open control notification screen 4B. FIG. 4B is a drawing illustrating an open control notification screen. As illustrated in FIG. 4B, the open control notification screen 4B includes a text T41 indicating that the open control of the selected door is being executed. When the open control of the selected door is completed, that is, when the selected door is in the open state, the control device 10 controls the output unit 130 to display an open control completion screen 4C. FIG. 4C is a drawing illustrating an open control completion screen. As illustrated in FIG. 4C, the open control completion screen 4C includes a text T42 indicating that the selected door is in the open state. After a predetermined time passes after displaying the open control notification screen 4B and the open control completion screen 4C, the control device 10 controls the output unit 130 to display the original screen.

When the determination that the user has entered the approach area of the selected door is made, the control device 10 controls the output unit 130 to display an open state notification screen 4D when the selected door is already in the open state. FIG. 4D is a drawing illustrating an open state notification screen. As illustrated in FIG. 4D, the open state notification screen 4D includes a text T43 indicating that the selected door is in the open state. After a predetermined time passes after displaying the open control notification screen 4B, the open control completion screen 4C, or the open state notification screen 4D, the control device 10 controls the output unit 130 to display the original screen.

Next, using FIG. 5A to FIG. 5E, a screen display in the control device 10 according to the embodiment when the user has gone outside the approach area of the selected door will be described. FIG. 5A is a drawing illustrating a close control confirmation screen. The close control confirmation screen is a screen for confirming whether to execute the close control of the selected door or not. When the determination that the user has gone outside the approach area of the selected door is made, the control device 10 controls the output unit 130 to display the close control confirmation screen illustrated in FIG. 5A. As illustrated in FIG. 5A, a close control confirmation screen 5A includes a text T50 indicating that the user is away from the selected door and the confirmation of executing the close control of the selected door, and a button (Yes/No button) B50 for selecting whether the user executes the close control or not. When the user selects the execution of the close control, the control device 10 causes the execution command for executing the close control of the selected door to be output to the opening and closing device 20 of the selected door. While the close control of the selected door is being executed, the control device 10 controls the output unit 130 to output a close control notification screen 5B. FIG. 5B is a drawing illustrating a close control notification screen. As illustrated in FIG. 5B, the close control notification screen 5B includes a text T51 indicating that the close control of the selected door is being executed.

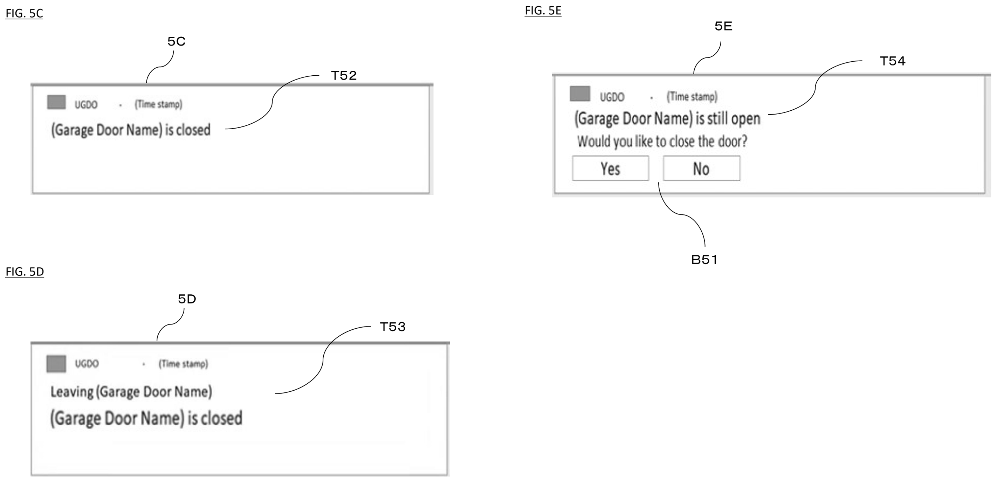

When the close control of the selected door is completed, that is, when the selected door is in the close state, the control device 10 controls the output unit 130 to display a close control completion screen 5C. FIG. 5C is a drawing illustrating a close control completion screen. As illustrated in FIG. 5C, the close control completion screen 5C includes a text T52 indicating that the selected door is in the close state. When the determination that the user has gone outside the approach area of the selected door is made, the control device 10 controls the output unit 130 to display a close state notification screen 5D when the selected door is already in the close state. FIG. 5D is a drawing illustrating a close state notification screen. As illustrated in FIG. 5D, the close state notification screen 5D includes a text T53 indicating that the selected door is in the close state. When the selected door is still in the open state after executing the close control, the control device 10 controls the output unit 130 to display a reconfirmation screen 5E for confirming whether to execute the close control of the selected door or not as illustrated in FIG. 5E. The reconfirmation screen 5E includes a text T54 indicating that the selected door is still in the open state and the confirmation of whether to execute the close control of the selected door or not, and a button (Yes/No button) B51 for selecting whether the user executes the close control or not. After a predetermined time passes after displaying the close control notification screen 5B, the close control completion screen 5C, the close state notification screen 5D, or the reconfirmation screen 5E, the control device 10 controls the output unit 130 to display the original screen.

In this embodiment, the output control unit 112 may cause the output unit 130 to display a display image including an identification display for identifying the selected door and a selection display on which whether the selected door is put into the open state or the close state is selectable on the home screen before activating the application for the open/close control of the target door. The identification display for identifying the selected door is, for example, a name of the selected door. The selection display includes, for example, a button to make the open state and a button to make the close state. The output control unit 112 causes the information for executing the open/close control to be output corresponding to the selection display selected by the user. For example, when the button to make the open state is selected by the user, the output control unit 112 outputs the execution command for executing the open control to the selected door via the communication unit 140.

While in this embodiment, the user sets a numerical value of the approach area on the setting screen 3B, the configuration is not limited to this, and the control device 10 may transition the screen from the setting screen 3B to an approach area setting screen for setting the approach area. The approach area setting screen includes a display image displaying a map image including the current location of the vehicle boarded by the user and the circle centering the selected door.

The screens illustrated in FIG. 4A to FIG. 4D and FIG. 5A to FIG. 5E may be displayed in a pop-up manner. The pop-up display is a display method displaying another screen on a screen being displayed. In this case, the pop-up display is hidden after a predetermined time passes or the user swipes it. When the pop-up display is on, a notification sound may be output.

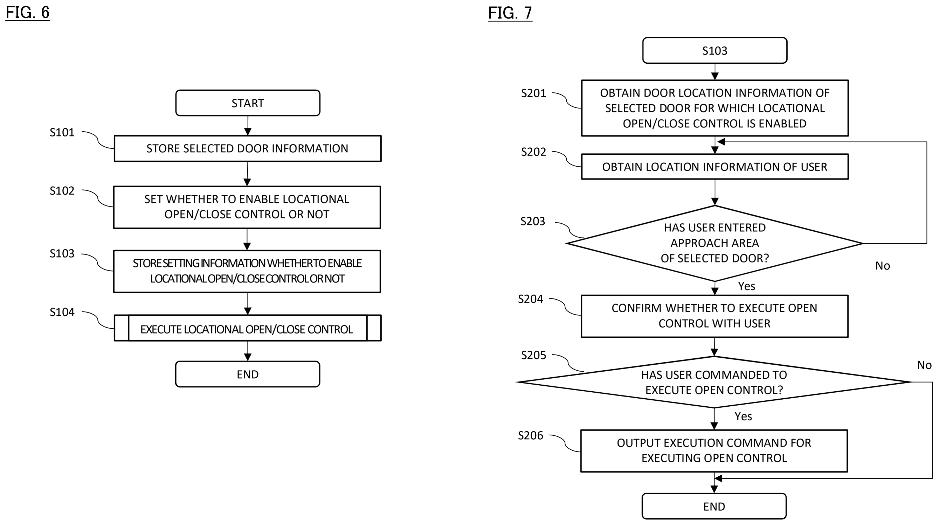

Next, using FIG. 6, an exemplary procedure of the control method according to the embodiment will be described. FIG. 6 is a flowchart showing the exemplary procedure of the control method according to the embodiment. At Step S101, the control device 10 stores the selected door information indicative of the selected door selected by the user. For example, when the user sets the target door as the selected door, the control device 10 stores the selected door information. At Step S102, the control device 10 sets whether to enable the locational open/close control or not for each of the plurality of target doors. At Step S103, the control device 10 stores the setting information of whether to enable the locational open/close control or not, which is set for each of the plurality of target doors. At Step S104, the control device 10 executes the locational open/close control for the selected door for which the locational open/close control is enabled. That is, the control device 10 identifies the selected door for which the locational open/close control is enabled on the basis of the information stored at Step S101 and Step S103, and outputs the execution command for executing the open/close control of the selected door to the selected door corresponding to the locational relationship between the location of the selected door and the location of the user. A more specific exemplary control method will be described by referring to FIG. 7. The control device 10 terminates the process after completing the control at Step S104.

Next, an exemplary procedure to execute the locational open/close control at Step S104 in FIG. 6 will be described. FIG. 7 is a flowchart showing the exemplary procedure to execute the locational open/close control according to the embodiment. While in FIG. 7, a situation in which the user has entered the approach area of the selected door is described as an example, the example is not limited to this, and the control device 10 may execute the close control in the situation where the user goes out of the approach area of the selected door. In this embodiment, after the process at Step S103 is executed, the control device 10 proceeds the process to Step S201 and starts the process from Step S201. At Step S201, the control device 10 obtains the door location information of the selected door for which the locational open/close control is enabled. For example, the location information of the selected door is preliminarily stored in the storage unit 120. At Step S202, the control device 10 obtains the location information of the user. For example, when the user is traveling by the vehicle 1, the control device 10 obtains the current location of the vehicle 1 as the location of the user. At Step S203, the control device 10 determines whether the user has entered the approach area of the selected door or not on the basis of the location of the selected door and the location of the user.

When the determination that the user has entered the approach area of the selected door is made, the control device 10 proceeds the process to Step S204. When the determination that the user has not entered the approach area of the selected door is made, the control device 10 returns the process to Step S202, and repeats the following process. At Step S204, the control device 10 confirms whether to execute the open control or not with the user. For example, the control device 10 controls the output unit 130 to display the confirmation display for the user to confirm whether to execute the open control or not. At Step S205, the control device 10 determines whether the user has commanded the open control or not. When determining that the user has commanded the open control, the control device 10 proceeds the process to Step S206. When determining that the user has not commanded the open control, the control device 10 terminates the control sequence. At Step S206, the control device 10 outputs the execution command for executing the open control to the opening and closing device 20 of the selected door via the communication unit 140. Note that, while in the flowchart in FIG. 7, the execution of the open control is confirmed with the user at Step S204 and Step S205, confirming the execution of the open control with the user is not a necessary configuration, and is appropriately set as necessary.

As described above, in this embodiment, the control device is a device which outputs the execution command for executing the locational open/close control which opens and closes the door corresponding to the locational relationship between the location of the door and the location of the user, stores the selected door information indicative of the selected door selected by the user among the plurality of doors and the setting information indicating whether to enable the locational open/close control or not, sets whether to enable the locational open/close control or not for each of the plurality of doors, and outputs the execution command to the selected door for which the locational open/close control is enabled corresponding to the locational relationship between the location of the selected door for which the locational open/close control is enabled and the location of the user. This allows execution of an open/close control of a door intended by a user.

In this embodiment, the control device sets to disable the locational open/close control for the door other than the selected door, and, when the user commands the open/close control which opens and closes the door for which the locational open/close control is disabled, outputs the execution command for executing the open/close control to the door for which the locational open/close control is disabled on the basis of the command by the user. This allows opening and closing a door not selected by the user when the user commands.

In this embodiment, the control device controls the output unit to display the display image including the identification display for identifying the selected door and the selection display on which whether to put the selected door into the open state or the close state is selectable on the home screen including the object for activating the application executed by the control device, and outputs the execution command for executing the open/close control which opens and closes the selected door to the selected door corresponding to the selection display selected by the user. This allows the user to execute the open/close control of the door on the home screen.

In this embodiment, the control device enables the operation of the user that selects whether to enable the locational open/close control or not for the selected door and disables the operation of the user that selects whether to enable the locational open/close control or not for the door other than the selected door. This allows the user to change the setting of enabling and disabling the locational open/close control only for the selected door.

In this embodiment, the control device enables the operation of selecting whether to enable the locational open/close control or not for the selected door and the door away from the selected door by the predetermined distance or more, and disables the operation of selecting whether to enable the locational open/close control or not for the door at the location at less than the predetermined distance from the selected door. This allows the user to change the setting of enabling and disabling the locational open/close control for the other door away from the selected door by the predetermined distance or more, besides the selected door.

In this embodiment, the control device sets to disable the locational open/close control for the selected door when the selected door is selected by the user. This allows disabling the setting of the locational open/close control at the time point when the user performs the input operation of selecting the selected door.

In this embodiment, the control device determines whether the door location information indicative of the location of the selected door is set or not when the user selects to enable the locational open/close control for the selected door, and instructs the user to set the door location information when the determination that the door location information is not set is made. This allows the user to set the door location information with more certainty.

In this embodiment, the control device controls the output unit to display the display image including the map image including the current location of the vehicle boarded by the user and the confirmation display for the user to confirm that the vehicle is present in the building in which the selected door is installed on the screen for setting the door location information indicative of the location of the selected door, and when the user commands to set the current location of the vehicle as the location of the selected door, sets the door location information with the current location of the vehicle as the location of the selected door. This allows the user to set the location of the selected door on the basis of the current location of the vehicle.

In this embodiment, the control device controls the output unit to display the display image in which the map image including the current location of the vehicle boarded by the user and the circle centering the selected door is displayed on the screen for setting the door location information indicative of the location of the selected door or the screen for setting the approach area for making a determination corresponding to the location of the selected door and the location of the user in the locational open/close control. This allows the user to perform respective settings while confirming the current location of the vehicle and the location of the selected door on the map.

In this embodiment, when the door different from the stored selected door is newly selected as the selected door, the control device updates the door stored as the selected door as the non-selected door, which is the door other than the selected door, and stores the selected door information indicative of the selected door newly selected. This allows updating the stored selected door when the user selects another door.

In this embodiment, the control device stores and associates the identification information that identifies each of the plurality of users and the selected door information indicative of the selected door selected by each of the plurality of users. This allows storing the selected door for each user.

In this embodiment, the control device determines whether the user has entered the approach area away from the selected door by the predetermined distance or not on the basis of the location of the selected door and the location of the user, and when the determination that the user has entered the approach area is made, controls the output unit to output the confirmation information for confirming whether to execute the open control which opens the selected door or not with the user. The confirmation information includes the confirmation display for the user to confirm the execution of the open control of the selected door and the captured image capturing the image of the environment near the selected door. This allows the user to open the selected door while confirming the environment near the selected door.

The embodiment described above has been described for ease of understanding the present invention, and is not described for limiting the present invention. Accordingly, each component disclosed in the above-described embodiment includes all the changes of design and equivalents falling within the technical scope of the present invention.

### Description of Reference Numerals

- 1000: Control system
- 1: Vehicle
- 10: Control device
- 100: Controller
- 110: Input unit
- 120: Storage unit
- 130: Output unit
- 140: Communication unit
- 2: Door
- 20: Opening and closing device

## Claims

1. A control device comprising:
a controller to output an execution command for executing a locational open/close control which opens and closes a door corresponding to a locational relationship between a location of the door and a location of a user; and
a storage medium to store selected door information indicative of a selected door selected by the user among a plurality of the doors and setting information indicating whether to enable the locational open/close control or not, wherein
the controller:
sets whether to enable the locational open/close control or not for each of the plurality of doors; and
outputs the execution command to the selected door for which the locational open/close control is enabled corresponding to a locational relationship between a location of the selected door for which the locational open/close control is enabled and the location of the user.

2. The control device according to claim 1, wherein
the controller:
sets to disable the locational open/close control for the door other than the selected door; and
when the user commands an open/close control which opens and closes the door for which the locational open/close control is disabled, outputs an execution command for executing the open/close control to the door for which the locational open/close control is disabled based on the command by the user.

3. The control device according to claim 1 or 2, wherein
the controller:
controls an output unit to display a display image including an identification display for identifying the selected door and a selection display on which whether to put the selected door into an open state or a close state is selectable, on a home screen including an object for activating an application executed by the control device; and
outputs an execution command for executing an open/close control which opens and closes the selected door to the selected door corresponding to the selection display selected by the user.

4. The control device according to any one of claims 1 to 3, wherein
the controller:
enables an operation by the user of selecting whether to enable the locational open/close control or not for the selected door; and
disables an operation by the user of selecting whether to enable the locational open/close control or not for the door other than the selected door.

5. The control device according to any one of claims 1 to 3, wherein
the controller:
enables an operation of selecting whether to enable the locational open/close control or not for the selected door and the door away from the selected door by a predetermined distance or more; and
disables an operation of selecting whether to enable the locational open/close control or not for the door at a location at less than a predetermined distance from the selected door.

6. The control device according to any one of claims 1 to 5, wherein
the controller sets to disable the locational open/close control for the selected door when the user selects the selected door.

7. The control device according to any one of claims 1 to 6, wherein
the controller:
determines whether door location information indicative of the location of the selected door is set or not when the user selects to enable the locational open/close control for the selected door; and
instructs the user to set the door location information when determining that the door location information is not set.

8. The control device according to claim 7, wherein
the controller:
controls an output unit to display a display image including a map image including a current location of a vehicle boarded by the user and a confirmation display for the user to confirm that the vehicle is present in a building in which the selected door is installed, on a screen for setting the door location information indicative of the location of the selected door; and
when the user commands to set the current location of the vehicle as the location of the selected door, sets the door location information with the current location of the vehicle as the location of the selected door.

9. The control device according to any one of claims 1 to 8, wherein
the controller:
controls an output unit to display a display image in which a map image including a current location of a vehicle boarded by the user and a circle centering the selected door is displayed on a screen for setting door location information indicative of the location of the selected door or a screen for setting an approach area for making a determination corresponding to the location of the selected door and the location of the user in the locational open/close control.

10. The control device according to any one of claims 1 to 9, wherein
when the door different from the stored selected door is newly selected as the selected door, the storage medium updates the door stored as the selected door as a non-selected door which is a door other than the selected door, and stores the selected door information indicative of the selected door newly selected.

11. The control device according to any one of claims 1 to 10, wherein
the storage medium stores and associates identification information which identifies each of a plurality of the users and the selected door information indicative of the selected door selected by each of the plurality of users.

12. The control device according to any one of claims 1 to 11, wherein
the controller:
determines whether the user has entered an approach area away from the selected door by a predetermined distance or not based on the location of the selected door and the location of the user; and
when determining that the user has entered the approach area, controls an output unit to output confirmation information for confirming whether to execute an open control which opens the selected door or not with the user, wherein
the confirmation information includes a confirmation display for the user to confirm execution of the open control of the selected door and a captured image capturing an image of an environment near the selected door.

13. A control method executed by a control device to output an execution command for executing a locational open/close control which opens and closes a door corresponding to a locational relationship between a location of the door and a location of a user, wherein
the control device:
stores selected door information indicative of a selected door selected by the user among a plurality of the doors and setting information indicating whether to enable the locational open/close control or not;
sets whether to enable the locational open/close control or not for each of the plurality of doors; and
outputs the execution command to the selected door for which the locational open/close control is enabled corresponding to a locational relationship between a location of the selected door for which the locational open/close control is enabled and the location of the user.
